# EUROPEAN PATENT SPECIFICATION

(11) **EP 3 865 595 B1**
(45) Date of publication and mention of the grant of the patent: **05.04.2023**
(21) Application number: 19871603.7
(22) Date of filing: 22.02.2019
(51) Int. Cl.: C21D 1/32, C21D 8/06, C22C 38/02, C22C 38/04, C22C 38/06, C22C 38/42, C22C 38/44, C22C 38/50, C22C 38/60, C21D 1/06, C21D 8/00, C21D 8/02, C22C 38/08, C22C 38/18, C22C 38/22, C22C 38/40

(54) **STEEL FOR WIND TURBINE MAIN SHAFT BEARING AND PRODUCTION METHOD THEREFOR**
STAHL FÜR WINDTURBINENHAUPTLAGER UND HERSTELLUNGSVERFAHREN DAFÜR
ACIER POUR PALIER D'ARBRE PRINCIPAL D'ÉOLIENNE ET SON PROCÉDÉ DE PRODUCTION

(30) Priority: 09.10.2018 CN 201811180693
(43) Date of publication of application: 18.08.2021
(73) Proprietor: Jiangyin Xingcheng Special Steel Works Co., Ltd, Jiangyin, Jiangsu 214434 (CN)
(72) Inventor: CHEN, Min, Jiangyin, Jiangsu 214434 (CN); LI, Feng, Jiangyin, Jiangsu 214434 (CN); XU, Xiaohong, Jiangyin, Jiangsu 214434 (CN); GENG, Ke, Jiangyin, Jiangsu 214434 (CN); BAI, Yun, Jiangyin, Jiangsu 214434 (CN); HUANG, Zhen, Jiangyin, Jiangsu 214434 (CN); YIN, Qing, Jiangyin, Jiangsu 214434 (CN); ZHAI, Jiaolong, Jiangyin, Jiangsu 214434 (CN)
(74) Representative: Huang, Liwei
(86) International application number: PCT/CN2019/075851
(87) International publication number: WO 2020/073576

(56) References cited:
- CN-B- 106 521 324
- US-A1- 2015 023 626

## Description

### Technical field

The present invention belongs to the field of metallurgical technology, in particular to a method for producing a steel for a main shaft bearing of a wind turbine.

### Background art

Wind energy, which represents the most promising renewable energy, is a green energy that is clean and pollution-free, and is now being increasingly concerned by the countries all over the world, for its broadest utilization prospects among the alternative energy resources and huge reserves.

A wind turbine bearing is an important transmission device of a wind turbine, with 32 sets of bearings used on one wind turbine. Hence, proper selection of bearings is very important to ensure the safe and stable operation of wind turbines. Wind turbine bearings are generally divided into the following types including yaw bearings, pitch bearings, main shaft bearings, speed-increasing bearings and turbine bearings. Different technical requirements are provided depending on different types of bearings.

The wind turbine bearings normally work under harsh conditions, and are subject to a wide range of temperature, humidity and load changes. Wherein, the main shaft bearing of the wind turbine is the main component to absorb a wind load and transmits the load, the performance of which not only affects the transmission efficiency, but also determines the maintenance cost of the main drive chain. It should be pointed out that, one-time installation and disassembly can reach up to hundreds to thousands of millions due to inconvenience and high cost in hoisting and replacing bearings, therefore, minimum requirements of main shaft bearings for wind turbine are given, which includes a 20-year service life and high reliability. To sum up, with view to the harsh working conditions and long service life, as well as high-reliability requirements of wind turbine, the bearings are challenged by high complexity with regards to technology, which has been recognized as one of the most difficult technologies in the process of localization, and also becomes the weakness in development of China wind power manufacturing industry.

Currently, the global wind turbine bearing market is dominant by foreign bearing giants. The domestic manufactures involved in wind turbine bearings deploy their main production capacity on the yaw bearing and pitch bearing which requires relatively low technology; while the main shaft bearing and the speed-increasing bearing with high technology are still dependent on imports as they are under development stage in China.

At present, the main shaft bearing of wind turbine mainly adopts bearing steel produced by application of electroslag remelting process, especially carburized bearing steel G20Cr2Ni4 that is produced by electroslag remelting process. The steel produced by the electroslag remelting has the quality advantages such as non-metallic inclusion particles with small size and uniform distribution, high uniformity in organization and high density, which ensures stable quality. However, there are also obvious disadvantages such as production efficiency, very low productivity, and very high energy consumption and production costs in electroslag remelting production process. Therefore, the electroslag remelting steel has low market competitiveness.

CN 106521324B discloses a carburized steel for an intermediate shaft gear for wind power, as well as a production method thereof.

### Detailed description of the invention

The invention is set out in the appended set of claims.

Based on the production of carburized bearing steel, the present application conducts optimized research and control of key processes by application of high efficiency, high capacity, and low cost process routes incorporating vacuum degassing, continuous casting, and rolling to attain steels having high purity, high uniformity and high density, which can substitute the current electroslag remelting production process, and meet the main shaft bearing steel requirements of wind turbine with regards to performance.

In order to fulfill the purity, uniformity, compactness, wear resistance and hardenability requirements of the steel used for the main shaft bearing of the wind turbine, the present invention adopts rational design of steel chemical constituents and invents a steel for main shaft bearing produced by new vacuum degassing + continuous casting.

The present invention puts forward strict requirements on both micro-inclusions and macro-inclusions, wherein the micro-inclusions includes type A and type C plastic inclusions and type B and type D brittle inclusions. Brittle inclusions are hard inclusions in steel, which can cause stress concentration during the bearing movement. Such inclusions are tend to be easily separated from the matrix in the process of steel deformation and lead to cracks in such a way to intensify stress concentration and thus cause cracking, the hazard may be increased in case of inclusions that have large particles and longer length. The plastic inclusions are soft inclusions in steel and are prone to get separated from the matrix during the deformation of the steel, so they have fewer hazards.

The present invention requires fine micro brittle inclusions: Index of Group B fine type ≤ 1.5, Index of Group B course type ≤ 1.0, Index of Group D fine type ≤ 1.0, Index of Group D coarse type ≤ 1.0, Index of Group DS type ≤ 1.0, the specific requirements are shown in Table 1 below. The macro-inclusions can lead to significantly reduced wear resistance of steel and serious stress concentration, thereby causing early failure in the use process of bearing. The present invention detects the macro defects based on SEP 1927 (Ultrasonic immersion testing method for determining the macroscopic cleanliness rate of rolled or forged steel bars), i.e. water immersion high-frequency detection methods, and the length of a single inclusion is required not to exceed 5mm.

**Table 1**

| Category | A | | B | | C | | D | | DS |
|---|---|---|---|---|---|---|---|---|---|
| | Fine type | Coarse type | Fine type | Coarse type | Fine type | Coarse type | Fine type | Coarse type | |
| Level | 1.5 | 1.0 | 1.5 | 1.0 | 0 | 0 | 1.0 | 1.0 | 1.0 |

The uniformity and density of the steel macrostructure have an impact on the service life of the bearing. The present invention requires to evaluate the steel macrostructure in accordance with GB/T 1979, which specifies the grade of center porosity ≤1.5, the grade of general porosity ≤ 1.0, grade of ingot segregation ≤1.0, and grade of center segregation ≤1.5, and no shrinkage cavity, cracks or subcutaneous bubbles.

In order to ensure the strength, toughness and impact resistance of the steel, the present invention requires the grain size number to be ≥5, while the tensile strength to be ≥1200MPa, and the impact performance AKU to be ≥65J; for the purpose of ensuring the cold workability of the steel, the hardness is required to be ≤260HBW, and the depth of decarburization to be ≤0.8%D (D refers to the diameter). In order to meet the use requirements of the main shaft bearing, the hardenability of the steel described in the present invention: the hardenability requirements are shown in Table 2 below.

**Table 2**

| Position | J1.5 | J3 | J5 | J7 | J9 | J11 | J13 | J15 | J20 | J25 | J30 | J35 | J40 | J45 | J50 |
|---|---|---|---|---|---|---|---|---|---|---|---|---|---|---|---|
| Standard | 43 | 42 | 42 | 41 | 41 | 41 | 41 | 40 | 40 | 39 | 38 | 37 | 36 | 35 | 34 |
| | - | - | - | - | - | - | - | - | - | - | - | - | - | - | - |
| | 48 | 47 | 47 | 46 | 46 | 46 | 46 | 46 | 46 | 46 | 45 | 45 | 44 | 44 | 43 |

The present invention adopts the following technical solution to solve the above problems: a steel for main shaft bearing of wind turbine, with the chemical constituents including: C: 0.10~0.30%, Si: 0.10~0.50%, Mn: 0.30~0.80%, Cr: 1.30 ~1.60%, S≤0.025%, P≤0.025%, Ni: 3.25~3.75%, Cu≤0.30%, Mo: 0.15~0.25%, Al: 0.005-0.05%, N: 0.005-0.015%, Ca≤0.0010 %, Ti≤0.003%, O≤0.0015%, As≤0.04%, Sn≤0.03%, Sb≤0.005%, Pb≤0.002%, the balance is Fe and unavoidable impurities. Below is considered as the design basis of the chemical constituents of the steel for main shaft bearing of wind turbine:
1) Determination of C content
   In carburized bearing steel, carbon content is one of the most important elements that determine the core hardness and hardenability of the parts after carburizing and quenching. Increasing the C content will bring in improvement in hardness and strength of the steel, thereby improving the wear resistance. But excessive C content can lead to adverse impact on the toughness of steel. Therefore, for carburized bearing steel, the bearing steel must not only have sound impact resistance inside but also sufficient strength. The present invention constrains its content within 0.10-0.30%
2) Determination of Si content
   Si is a deoxidizing element in steel, which improves the hardness and strength of steel in the form of solid solution strengthening. It reduces the diffusion rate of C in the ferrite in such a way to make the carbides precipitated during tempering not easily accumulated, and increase the tempering stability of the steel, therefore, it not only contributes to reduction of internal stress in material but also maintenance of high hardness when the steel is tempered at a lower temperature. Besides, Si reduces oxidation during frictional heating and improves the cold deformation hardening rate of steel, thus improving the wear resistance of the material. However, high content of Si can cause low toughness of the steel becomes low, and Si may also increase the tendency of overheating sensitivity, cracking and decarburization the steel. The present invention constrains the Si content within 0.10 to 0.50%.
3) Determination of Mn content
   As a deoxidizing element in steelmaking, Mn is an element effective for strengthening steel, which has a solid solution strengthening effect; Mn can increase the hardenability of steel, thereby improving the hot workability of steel. Mn's ability in elimination of the impact of S (sulfur): Mn reacts S with in steel smelting to produce high-melting MnS, thereby weakening and eliminating the adverse effects of S. But high Mn content can reduce the toughness of steel. The Mn content of the present invention is constrained within 0.30 to 0.80%.
4) Determination of Cr content
   Cr is a carbide-forming element that can improve the hardenability, wear resistance and corrosion resistance of steel. However, excessive high content of Cr content, if combined with the carbon in the steel, may easily produce large carbides, which are insoluble and may cause reduced toughness of the steel. Chromium in carburized bearing steel can adjust the hardenability, improve the wear resistance of the carburized layer, and improve the mechanical properties of the steel. In addition, chromium contributes to stabilized heat treatment of steel, enabling good carburizing performance and reduced unevenness of carbides. The Cr content of the present invention is determined within the range of 1.30-1.60%.
5) Determination of Al content
   Al is added as a deoxidizing element in steel, Al and N reacts to form small and dispersed aluminum nitride inclusions that refine grains, besides reduction of the dissolved oxygen in molten steel. But in case of excessive Al content, brittle inclusions, such as large-particle Al₂O₃, may be easily produced in molten steel melting, which can cause reduced purity of the molten steel, thereby affecting the service life of the finished product. The Al content of the present invention is determined within the range of 0.005%-0.05%.
6) Determination of Ni content
   Nickel can reduce the ability of the surface to absorb carbon atoms in steel, accelerate the diffusion of carbon atoms in austenite, and reduce the concentration of carbon in the carburized layer, so nickel is able to slow down the carburizing rate; and, adding nickel will improve the steel toughness. The Ni content of the present invention is determined within the range of 3.25%-3.75%.
7) Determination of Mo content
   The molybdenum, in carburizing bearing steel, plays a key role of improving the hardenability, improving the mechanical properties of the steel, especially with regards to improving toughness. It can also improve the wear resistance and carburizing properties. The Mo content of the present invention is determined within the range 0.15%-0.25%.
8) Determination of N content
   In case that supersaturated nitrogen is dissolved in steel, nitrogen will precipitate in the form of nitrides after a long period of time, then the hardness and strength of the steel will be increased, the plasticity will be decreased, and aging will occur. Adding an appropriate amount of aluminum in the steel can generate stable AlN, which can suppress the formation and precipitation of Fe4N. In this way, it not only improves the aging property of the steel, but also prevents the growth of austenite grains and has the effect of grain refinement. However, nitrogen may react with an alloying element in steel to produce nitride non-metallic inclusions, more importantly, reducing the effect of alloying elements. In case of high nitrogen content in steel, the strength of the steel will increase and the impact toughness may be reduced. The N content of the present invention is determined within the range of 0.005-0.015%.
9) Determination of Ca content
   Ca content can increase the number and size of point oxides in the steel. Due to high hardness and poor plasticity, point oxides may not be deformed when the steel is deformed, instead, they will easily form voids at the joint interface, resulting in degraded performance of the steel. The Ca content in the present invention is determined within the range of ≤0.001%.
10) Determination of Ti content
   Ti element combines with N element to form titanium nitride inclusions, due to its high hardness and sharp angle, which can easily cause stress concentration during bearing transfer and impose great impact on the service life of bearings. Thus, Ti is controlled ≤0.0030%.
11) Determination of O content
   Oxygen content represents the total amount of oxide inclusions, and limiting the brittle oxide inclusions affects the service life of the finished product. It is demonstrated by a huge number of tests that the reduction of oxygen content is significantly beneficial to improving the steel purity, especially reducing the content of brittle oxide inclusions in steel. The oxygen content of the present invention is determined within the range of ≤0.0015%.
12) Determination of P and S content
   P element causes element segregation during the process of steel solidification, makes the grains become distorted and coarser when it is dissolved in ferrite, and increases cold brittleness, therefore, it is determined as P≤0.025%; S element tends to cause hot brittleness of steel and reduce the steel ductility and toughness, and the sulfide formed thereof destroys the continuity of the steel, it is therefore determined as S≤0.025%.
13) Determination of As, Sn, Sb, Pb content
   As, Sn, Sb, Pb and other micro-element all belong to all low-melting non-ferrous metals, which, if existing in steel, may cause presence of soft spots and uneven hardness on the surface of parts. Hence, they are regarded as harmful elements in steel, and their content in the present invention are determined as follows: As≤0.04%, Sn≤0.03%, Sb≤0.005%, Pb≤0.002%.

Another purpose of the present application is to provide a method for producing the steel for the main shaft bearing of a wind turbine, i.e. smelting billet by continuous casting instead of electroslag remelting, comprising the following main steps:
(1) Molten steel smelting;
(2) CCM large continuous casting billet with large cross-section continuous casting; and ensure that the steel compression ratio is greater than 4;
(3) Slow cooling of continuous casting billet, followed by softening annealing: Slow cooling of continuous casting billet is to perform slow cooling of the continuous casting billet in pit, wherein the temperature of the billet entering the pit is greater than 600°C, and the slow cooling duration in pit is greater than 48 hours, the temperature of the billet exiting the pit is less than 200°C, and the softening annealing is carried out within 24 hours after the billet is removed out of the pit; the softening annealing temperature is 600-700°C, the time of heating and holding the temperature is ≥10h, and then the billet is cooled to 450°C with the furnace and then air-cooled to the room temperature after removal out of the furnace;
(4) Continuous rolling: after heating to 1150°C-1280°C in a heating furnace with a neutral or weak oxidizing atmosphere (with the time of heating and holding the temperature ≥7h), the continuous casting billet out of the furnace is dephosphorized by high pressure water and then rolled into round bars in the rough rolling-medium rolling - finishing rolling machine, with the total compression ratio of ≥4, and the rough rolling temperature within 1000-1150°C; after that, the austenite grains heated at high temperature are recrystallized and refined, and the final rolling temperature is controlled at 800-950°C to make the final rolling performed in the non-recrystallization temperature range, which lengthens the deformed austenite grains. As there are many deformation bands in the grains, the ferrite grains after phase transformation can be refined in order to improve the strength and toughness of steel;
(5) Slow cooling and softening annealing of the rolled material: the rolled bars are slowly cooled in the pit at a temperature of 480°C or above for more than 60 hours, the temperature of the bars exiting the pit is less than 200°C, and the bars are subjected to softening annealing within 24 hours after being removed out of the pit; the softening annealing temperature is controlled at 600-700°C, the holding time is ≥7h, and then the billet is cooled to 500°C with the furnace and then air-cooled to the room temperature after removal from the furnace;
(6) Finishing.

In step 1: treating the smelting raw materials sequentially by KR pretreatment of molten iron, electric furnace or converter smelting, LF refining, and RH or VD vacuum degassing to obtain pure molten steel with the required chemical constituents.

The raw smelting materials comprise high-quality molten iron, steel scrap, and auxiliary materials, wherein high-quality refractory materials are selected, high-performance refined synthetic slag are used in the smelting process to control the quantity and shape of various inclusions in steel, the ladle arc refining furnace carries out a long-term inclusion removal process to make the non-metallic inclusions fully floated, and it is necessary to select special refined slag and tundish protective slag to absorb the inclusions.

Preferably, step 2: implementing tundish induction heating, light reduction and electromagnetic stirring for continuous casting to effectively improve the segregation and material structure of the cast billet; applying continuous casting with whole-process protection and large cross-section to make the steel compression ratio greater than 4, thereby effectively ensuring the material density; adopting low superheat pouring for continuous casting to control the continuous casting superheat as ≤35°C and effectively improve the uniformity of the material, thus to produce a rectangular billet of 390×510mm or above or a round continuous casting billet of ϕ600 or above, which is in compliance with the chemical constituents of the finished steel product.

Specifically, Step 6: finishing includes the finishing processes such as straightening and detecting to obtain the target finished bar product.

All products must be subjected to 100% non-destructive testing, which are considered as qualified products after passing the test.

The production process mainly has the following characteristics:
1. The iron must undergo molten iron pretreatment during molten steel smelting, and strict control is made over the quality of steel scrap, with priority given to low-titanium alloys, deoxidizers and refractory materials; the converter tapping adopts such process technologies as slag cutoff tapping, dedrossing behind the furnace to solve the problem of high content of harmful elements Ti, Ca, As, Sn, Pb, and Sb in the prior art;
2. Deoxidation technology and RH vacuum degassing process are applied to reduce the content of O and H in the steel to an extremely low level, and effectively control the quantity and size of inclusions. The test shows that the quantity and size of inclusions in the product of the present invention have reached the world leading level.
3. Continuous casting applies low superheat pouring, and also tundish induction heating, light reduction and electromagnetic stirring technologies to effectively improve the segregation and material structure of the cast billet; adopts continuous casting with whole-process protection and large cross-section to make the steel compression ratio greater than 4, thereby effectively ensuring the material density;
4. Continuous casting billet and rolling materials are subjected to slow cooling in pit + softening annealing treatment to avoid cracking of steel due to changes in surface and internal thermal stress as well as structural stress.
5. With regards to manufacturing process, the vacuum degassing + continuous casting is adopted and the process has the advantages of reducing the production cycle, improving the production efficiency, effectively reducing the manufacturing cost as compared with electroslag remelting, which enables realization of large-scale production, favorable for improving the material composition and product quality stability;
6. The steel for the main shaft bearing of the wind turbine of the present invention meets the following index requirements:
   Micro-inclusions are tested according to GB/T 10561 A method, and the results show Index of Group B fine type ≤ 1.5, Index of Group B course type ≤ 1.0, Index of Group D fine type ≤ 1.0, Index of Group D coarse type ≤ 1.0, Index of Group DS type ≤ 1.0; macro defects are tested according to the SEP 1927 method, and the results show the length of a single inclusion does not exceed 5mm; the macrostructure is required to evaluate according to GB/T 1979, which specifies the grade of center porosity ≤ 1.5, grade of general porosity ≤ 1.0, and grade of ingot segregation ≤ 1.0. grade of center segregation ≤1.5, and no shrinkage cavity, cracks or subcutaneous bubbles.

### Description of the drawings

FIG. 1 depicts a microstructure view of an embodiment product;
FIG.2 depicts a microstructure view of a comparison product.

### Detailed description of embodiments

In conjunction with the embodiments, the present invention is illustrated in detailed below.

See Table 3 for the chemical constituents (wt%) of each embodiment of the present invention and (for comparison) the electroslag remelted G20Cr2Ni4 currently used in the market.

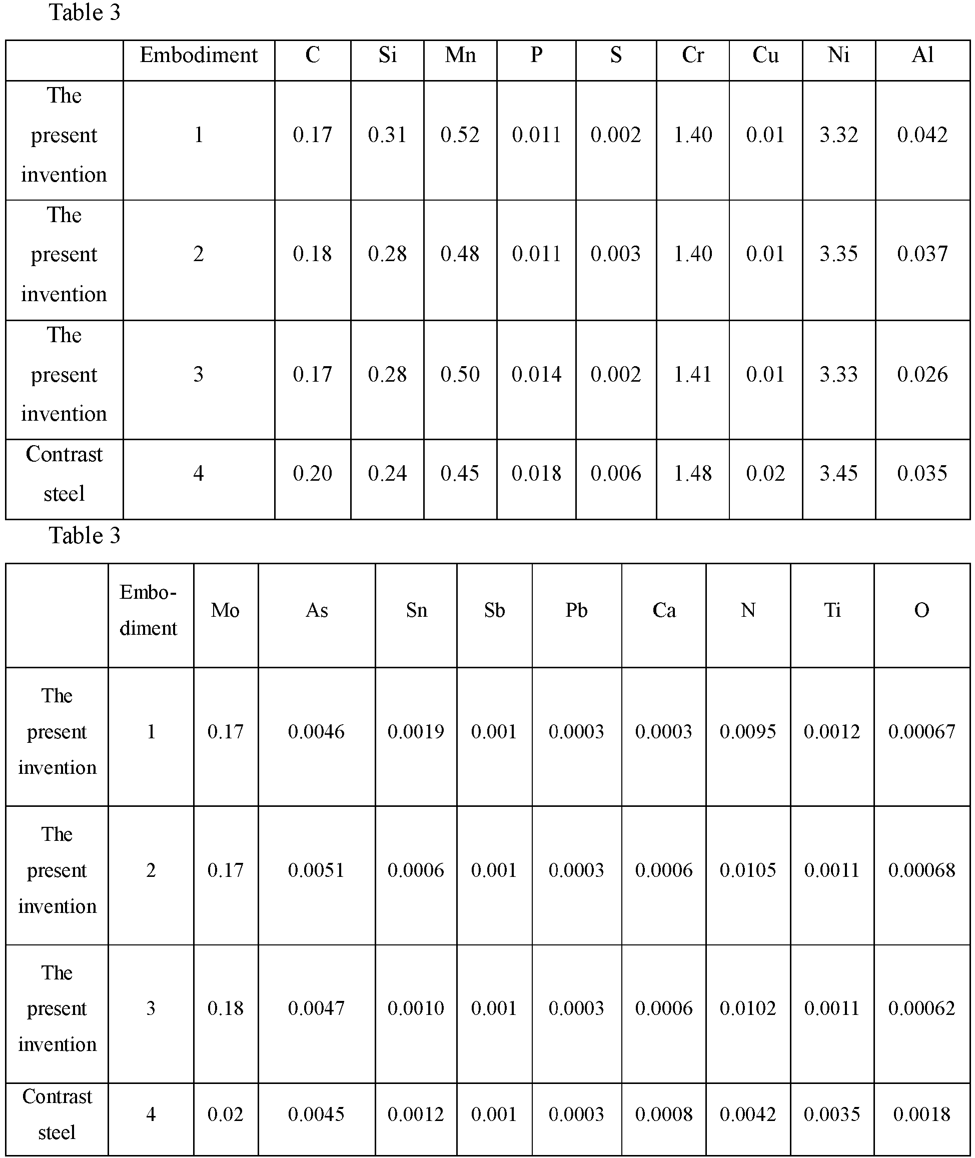

**Table 4 Inclusions in the steel of each embodiment**

| | Embodiment | A fine | A coarse | B fine | B coarse | C fine | C coarse | D fine | D coarse | Ds |
|---|---|---|---|---|---|---|---|---|---|---|
| Φ230 for the present invention | 1 | 0.5 | 0 | 0∼0.5 | 0 | 0 | 0 | 0.5 | 0∼0.5 | 0∼0.5 |
| Φ230 for the present invention | 2 | 0.5 | 0 | 0∼0.5 | 0∼0.5 | 0 | 0 | 0.5 | 0 | 0 |
| The present invention Φ230 | 3 | 0.5 | 0 | 0∼0.5 | 0 | 0 | 0 | 0.5 | 0 | 0∼0.5 |
| Contrast steel | 4 | 0.5 | 0 | 0∼0.5 | 0∼1.0 | 0 | 0 | 0.5-∼1 | 0.5 | 0∼1.0 |

**Table 5 End-hardenability of steel in various embodiments**

| | J1.5 | J3 | J5 | J7 | J9 | J11 | J13 | J15 | J20 | J25 | J30 | J35 | J40 | J45 | J50 |
|---|---|---|---|---|---|---|---|---|---|---|---|---|---|---|---|
| Embodiment 1 of the present invention | 44 | 43.5 | 43.5 | 43 | 43 | 43 | 43 | 43 | 43 | 43 | 41 | 41 | 41 | 40 | 39.5 |
| Embodiment 2 of the present invention | 45 | 42 | 42 | 42 | 42 | 42 | 42 | 42 | 41.5 | 41.5 | 41 | 40 | 40 | 38 | 38 |
| Embodiment 3 of the present invention | 44 | 43 | 43 | 43 | 43 | 43 | 43 | 43 | 43 | 42.5 | 41.5 | 41.5 | 40 | 39.5 | 39 |
| Contrast steel | 43 | 41.5 | 41 | 41.5 | 40 | 40 | 39.5 | 39 | 39 | 39 | 38.5 | 38 | 38 | 37 | 37 |

**Table 6 The grain size number, hardness and mechanical property of each embodiment**

| | Grain size number | Hardness (HBW) | Tensile strength (MPa) | Impact toughness AKU (1) |
|---|---|---|---|---|
| Embodiment 1 of the present invention | 7.5 | 209 | 1457 | 88 |
| Embodiment 2 of the present invention | 7 | 213 | 1468 | 76 |
| Embodiment 3 of the present invention | 7.5 | 206 | 1465 | 82 |
| Contrast steel | 6 | 201 | 1410 | 79 |

**Table 7 Microstructure data of steel in various embodiments**

| | Grade of center porosity | Grade of general porosity | Grade of ingot segregation | Grade of center segregation | Crack | Shrinkage cavity | Subcutaneous bubble |
|---|---|---|---|---|---|---|---|
| Embodiment 1 of the present invention | 1 | 1.0 | 1.0 | 1.0 | None | None | None |
| Embodiment 2 of the present invention | 1 | 1.0 | 1.0 | 1.0 | None | None | None |
| Embodiment 3 of the present invention | 1 | 1.0 | 1.0 | 1.0 | None | None | None |
| Contrast steel | 1.5 | 1.0 | 1.0 | 1.0 | None | None | None |

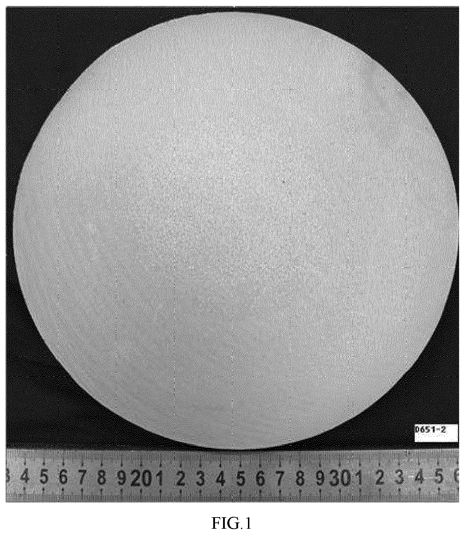

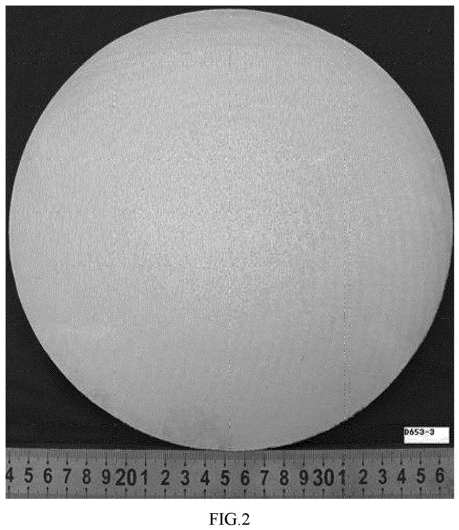

The macrostructure of any product in the embodiment is shown in FIG. 1, and the macrostructure of the comparison embodiment is shown in FIG.2.

The manufacturing process of the steel for the main shaft bearing of the wind turbine of the embodiment of the present invention is given as below: molten iron pretreatment + top-bottom combined blowing converter BOF (high-power electric arc furnace EAF)-ladle arc refining furnace LF-vacuum degassing furnace RH (VD furnace) -CCM large continuous casting billet with large cross-section continuous casting-continuous rolling-finishing process.

Specifically, the smelting materials comprise high-quality molten iron, steel scrap, and auxiliary materials, wherein high-quality desoxidant and refractory materials are selected. In the electric furnace/converter production process, the tapping endpoint C of the three embodiments is respectively controlled ≥0.10%, the endpoint P is controlled ≤0.015%, and the continuous casting superheat is controlled within 10-35°C. The slow cooling in pit is performed for the produced continuous casting billet, wherein the temperature of the billet entering the pit is greater than 600°C, the slow cooling duration in pit is greater than 48 hours, and the temperature of the billet exiting the pit is less than 200°C, and softening annealing is carried out within 24 hours after the billet is removed out of the pit. The softening annealing temperature is 600-700°C, the heating and holding time is ≥10h, and then the billets are cooled to 450°C with the furnace and then air-cooled to the room temperature after being removed out of the furnace; after being subjected to shot blasting, the said continuous casting round billets are heated and rolled into the target bars in a heating furnace in a neutral or weak oxidizing atmosphere, which are slowly cooled in the lower pit after the rolling is completed. The heating, rolling and cooling processes of rolled steel are shown in Table 8 below. The bars are treated with softening annealing again within 24 hours after getting out of the pit. The softening annealing temperature is 600-700°C, the holding time is ≥7h, and then the bars are cooled to 500°C with the furnace and then air-cooled to the room temperature after being removed out of the furnace; After that, the bars are further straightened and detected to obtain the target bars.

**Table 8**

| SN | Heating process | | Hot rolling process | | Rolled material cooling process | | |
|---|---|---|---|---|---|---|---|
| | Heating temperature (°C) | Heating time (h) | Rolling temperature (°C) | Final rolling temperature (°C) | Temperature of the billet entering the pit (°C) | Slow cooling time in pit (h) | Temperature of the billet exiting the pit (°C) |
| 1 | 1250 | 11h25min | 1100 | 870 | 510 | 62 | 120 |
| 2 | 1254 | 12h30min | 1115 | 900 | 525 | 65 | 150 |
| 3 | 1256 | 10h50min | 1112 | 880 | 505 | 62 | 160 |

As can be observed by comparison of Tables 3, 4, 5, 6, and 7, compared with the G20Cr2Ni4 steel produced by electroslag remelting, the steel for the main shaft bearing of the wind turbine in each embodiment of the present invention has better control over harmful elements such as oxygen, titanium and non-metallic inclusions, that is, the steel purity is obviously superior to that of products produced by electroslag remelting; from the microstructure test results, the microstructure quality of the present invention is not inferior to the G20Cr2Ni4 steel produced by the electroslag remelting, which suggests the uniformity and density of the present invention are equivalent to the quality of the steel produced by the electroslag remelting. Based on the above analysis, the steel for main shaft bearing of wind turbine produced by the vacuum degassing + continuous casting production process of the present invention can replace the product produced by application of the original electroslag remelting, which significantly improves the production efficiency, reduces the production costs, thus significantly enhancing the product competitiveness.

In summary, the present invention relates to a steel for main shaft bearing of wind turbine and a production method thereof. In view of the overall concept of improving the purity of the steel, the present application conducts optimized research and control of key processes by application of high efficiency, high capacity, and low cost process routes incorporating vacuum degassing, continuous casting, and rolling to attain steels having high purity, high uniformity and high density, which can substitute the current electroslag remelting production process, and make the performance meet the main shaft bearing steel requirements of wind turbine. It is more competitive in production efficiency, production cost and product quality stability.

## Claims

1. A method for producing a steel for a main shaft bearing of a wind turbine, comprising the following steps:
(1) smelting of molten steel, wherein raw materials are sequentially treated by KR pretreatment of molten iron, smelting by electric furnace or converter, LF refining, and RH or VD vacuum degassing;
(2) continuous casting of CCM large continuous casting billet with large cross-section; wherein the continuous casting billet meets the following requirements: C: 0.10~0.30%, Si: 0.10~0.50%, Mn: 0.30 ~ 0.80%, Cr: 1.30 ~ 1.60%, S≤0.025%, P≤0.025%, Ni: 3.25 ~ 3.75%, Cu≤0.30%, Mo: 0.15 ~ 0.25%, Al: 0.005-0.05%, N: 0.005 -0.015%, Ca≤0.0010%, Ti≤0.003%, O≤0.0015%, As≤0.04%, Sn≤0.03%, Sb≤0.005%, Pb≤0.002%, the balance is Fe and unavoidable impurities;
(3) slow cooling of continuous casting billet, followed by softening annealing, wherein the slow cooling of continuous casting billet is performing the slow cooling in a pit, wherein a temperature of the billet entering the pit is greater than 600°C, and the duration of the slow cooling in the pit is greater than 48 hours, a temperature of the billet exiting the pit is less than 200°C, and the softening annealing is carried out within 24 hours after the billet is removed out of the pit, the softening annealing temperature is 600-700°C, the time of heating and holding the temperature is ≥10h, and then the billets are cooled to 450°C with the furnace, and then air-cooled to the room temperature after being removed out of the furnace;
(4) continuous rolling: after heating to 1150°C-1280°C in a heating furnace with a neutral atmosphere, and the time of heating and holding the temperature is ≥7h, the continuous casting billet out of the furnace is dephosphorized by high pressure water and then rolled into round bars in rough rolling - medium rolling - finishing rolling machines, with the total compression ratio of ≥ 4, and the rough rolling temperature is 1000-1150°C; after that, the austenite grains heated at high temperature are recrystallized and refined, and the final rolling temperature is controlled at 800-950°C to make the final rolling performed in the non-recrystallization temperature range, which lengthens the deformed austenite grains; as there are many deformation bands in the grains, the ferrite grains after phase transformation can be refined;
(5) slow cooling and softening annealing, wherein the rolled bars having a temperature of 480°C or above are slowly cooled in a pit, wherein the slow cooling lasts more than 60 hours, a temperature of the bars exiting the pit is less than 200°C, and the bars are subjected to softening annealing within 24 hours after being removed out of the pit,
the softening annealing temperature is 600-700°C, the holding time is ≥7h, and then the material is cooled to 500°C in the furnace, and then air-cooled to the room temperature after being removed out of the furnace;
(6) finishing.

2. The method for producing the steel for the main shaft bearing of wind turbine according to Claim 1, wherein in step 2 implementing induction heating of tundish, light reduction and electromagnetic stirring to effectively improve the segregation and material structure of the cast billet; applying casting with whole-process protection and low superheat pouring to control the continuous casting superheat as ≤35°C, thereby producing a rectangular billet of 390x510 mm or above, or a round continuous casting billet of ϕ600 or above, which is in compliance with the chemical constituents of the finished steel product.

## Patentansprüche

1. Verfahren zum Herstellen eines Stahls für ein Hauptlager einer Windturbine, umfassend die folgenden Schritte:
(1) Verhütten von geschmolzenem Stahl, wobei Rohstoffe nacheinander durch KR-Vorbehandlung von geschmolzenem Eisen, Verhütten durch Elektroofen oder -konverter, LF-Raffination und RH- oder VD-Vakuumentgasung behandelt werden;
(2) Stranggießen eines großen CCM-Stranggussknüppels mit großem Querschnitt; wobei der Stranggussknüppel die folgenden Anforderungen erfüllt: C: 0,10~0,30 %, Si: 0,10~0,50 %, Mn: 0,30~0,80 %, Cr: 1,30~1,60 %, S ≤ 0,025 %, P ≤ 0,025 %, Ni: 3,25~3,75 %, Cu ≤ 0,30 %, Mo: 0,15~0,25 %, Al: 0,005-0,05 %, N: 0,005-0,015 %, Ca ≤ 0,0010 %, Ti ≤ 0,003 %, O ≤ 0,0015 %, As ≤ 0,04 %, Sn ≤ 0,03 %, Sb ≤ 0,005 %, Pb ≤ 0,002 %, der Rest ist Fe und unvermeidbare Verunreinigungen;
(3) langsames Abkühlen des Stranggussknüppels, gefolgt von Weichglühen, wobei es sich bei dem langsamen Abkühlen des Stranggussknüppels um Durchführen des langsamen Abkühlens in einer Grube handelt, wobei eine Temperatur des in die Grube eintretenden Knüppels mehr als 600 °C beträgt und die Dauer des langsamen Abkühlens in der Grube mehr als 48 Stunden beträgt, eine Temperatur des aus der Grube austretenden Knüppels weniger als 200 °C beträgt und das Weichglühen innerhalb von 24 Stunden, nachdem der Knüppel aus der Grube entfernt wurde, durchgeführt wird, die Weichglühtemperatur 600-700 °C beträgt, die Zeit zum Erhitzen und Halten der Temperatur ≥ 10 h beträgt und dann die Knüppel mit dem Ofen auf 450 °C abgekühlt und dann nach dem Entfernen aus dem Ofen auf Raumtemperatur luftgekühlt werden;
(4) Kontinuierliches Walzen: Nach dem Erhitzen auf 1150 °C-1280 °C in einem Heizofen mit neutraler Atmosphäre und die Dauer des Erhitzens und Haltens der Temperatur beträgt ≥ 7 h, wird der Stranggussknüppel aus dem Ofen durch Hochdruckwasser entphosphoriert und dann in Grobwalz-, Mittelwalz- und Endwalzmaschinen mit einem Gesamtkompressionsverhältnis von ≥ 4 in runde Knüppel gewalzt, und die Rohwalztemperatur beträgt 1000-1150 °C; danach werden die auf hoher Temperatur erhitzten Austenitkörner rekristallisiert und raffiniert und die Endwalztemperatur wird auf 800-950 °C gesteuert, um dazu zu führen, dass das Endwalzen im Nicht-Rekristallisationstemperaturbereich durchgeführt wird, wodurch die verformten Austenitkörner verlängert werden; da viele Verformungsbänder in den Körnern vorhanden sind, können die Ferritkörner nach der Phasenumwandlung raffiniert werden;
(5) langsames Abkühlen und Weichglühen, wobei die gewalzten Knüppel, die eine Temperatur von 480 °C oder mehr aufweisen, in einer Grube langsam abgekühlt werden, wobei das langsame Abkühlen mehr als 60 Stunden dauert, eine Temperatur der aus der Grube austretenden Knüppel weniger als 200 °C beträgt und die Knüppel innerhalb von 24 Stunden nach dem Entfernen aus der Grube einem Weichglühen ausgesetzt werden,
die Weichglühtemperatur 600-700 °C beträgt, die Haltezeit > 7 h beträgt und das Material dann im Ofen auf 500 °C gekühlt wird und dann nach dem Entfernen aus dem Ofen auf Raumtemperatur luftgekühlt wird;
(6) Fertigstellen.

2. Verfahren zur Herstellung des Stahls für das Hauptlager einer Windturbine nach Anspruch 1, wobei in Schritt 2 Umsetzen einer Induktionserwärmung des Zwischenbehälters, einer Lichtreduktion und eines elektromagnetischen Rührens, um die Entmischung und Materialstruktur des gegossenen Knüppels wirksam zu verbessern; Anwenden von Gießen mit Schutz des gesamten Prozesses und Gießen mit geringer Überhitzung, um die Überhitzung des Stranggusses auf ≤ 35 °C zu steuern, wodurch ein rechteckiger Knüppel von 390 × 510 mm oder mehr oder ein runder Stranggussknüppel von ϕ600 oder mehr hergestellt wird, was mit den chemischen Bestandteilen des fertiggestellten Stahlprodukts konform ist.

## Revendications

1. Procédé permettant la production d'un acier pour un palier d'arbre principal d'une éolienne, comprenant les étapes suivantes :
(1) fusion d'acier fondu, lesdites matières premières étant traitées séquentiellement par prétraitement KR de fer fondu, fusion par four électrique ou convertisseur, affinage LF et dégazage sous vide RH ou VD ;
(2) coulée continue de grande billette de coulée continue CCM avec une grande section transversale ; ladite billette de coulée continue répondant aux exigences suivantes : C : 0,10~0,30 %, Si: 0,10~0,50 %, Mn : 0,30 ~0,80 %, Cr : 1,30~1,60 %, S ≤ 0,025 %, P ≤ 0,025 %, Ni : 3,25~3,75 %, Cu ≤ 0,30 %, Mo : 0,15~0,25 %, Al : 0,005-0,05 % ; N : 0,005-0,015 %, Ca ≤ 0,0010 %, Ti ≤ 0,003 %, O ≤ 0,0015 %, As ≤ 0,04 %, Sn ≤ 0,03 %, Sb ≤ 0,005 %, Pb ≤ 0,002 %, le reste étant du Fe et des impuretés inévitables ;
(3) refroidissement lent de la billette de coulée continue, suivi d'un recuit d'adoucissement, ledit refroidissement lent de la billette de coulée continue effectuant le refroidissement lent dans une fosse, une température de la billette entrant dans la fosse étant supérieure à 600°C, et ladite durée du refroidissement lent dans la fosse étant supérieure à 48 heures, une température de la billette sortant de la fosse étant inférieure à 200°C, et ledit recuit d'adoucissement étant effectué dans les 24 heures après le retrait de la billette de la fosse, la température de recuit d'adoucissement étant de 600-700°C, ledit temps de chauffage et de maintien de la température étant ≥ 10 h, et ensuite les billettes étant refroidies à 450°C avec le four, et ensuite refroidies à l'air à la température ambiante après avoir été retirées du four ;
(4) laminage continu : après chauffage à 1150°C-1280°C dans un four de chauffage à atmosphère neutre, et ledit temps de chauffage et de maintien de la température étant ≥ 7h, ladite billette de coulée continue hors du four étant déphosphorée par de l'eau à haute pression et ensuite laminée en barres rondes dans des laminoirs grossier - moyen - de finition, avec un taux de compression total ≥ 4, et ladite température de laminage grossier étant de 1000-1150°C ; après quoi, les grains d'austénite chauffés à haute température sont recristallisés et affinés, et la température de laminage finale est régulée à 800-950°C pour effectuer le laminage final réalisé dans la plage de températures de non-recristallisation, ce qui allonge les grains d'austénite déformés ; dans la mesure où de nombreuses bandes de déformation existent dans les grains, les grains de ferrite après une transformation de phase peuvent être affinés ;
(5) refroidissement lent et recuit d'adoucissement, lesdites barres laminées possédant une température supérieure ou égale à 480°C sont lentement refroidies dans une fosse, ledit refroidissement lent durant plus de 60 heures, une température des barres sortant de la fosse étant inférieure à 200°C, et lesdites barres subissant un recuit d'adoucissement dans les 24 heures après leur retrait de la fosse,
ladite température de recuit d'adoucissement étant de 600-700°C, ledit temps de maintien étant ≥ 7 h, et ensuite ledit matériau étant refroidi à 500°C dans le four, et ensuite refroidi à l'air jusqu'à la température ambiante après avoir été retiré du four ;
(6) finition.

2. Procédé permettant la production de l'acier pour le palier d'arbre principal d'une éolienne selon la revendication 1, à l'étape 2, ladite mise en oeuvre du chauffage par induction du panier répartiteur, de la réduction de la lumière et de l'agitation électromagnétique pour améliorer efficacement la ségrégation et la structure du matériau de la billette coulée ; l'application d'une coulée avec une protection de l'ensemble du processus et un versement à faible surchauffe pour réguler la surchauffe de coulée continue telle que ≤ 35°C, produisant ainsi une billette rectangulaire de 390x510 mm ou plus, ou une billette ronde de coulée continue de ϕ 600 ou plus, qui est conforme aux constituants chimiques du produit fini en acier.
